(19) Europäisches Patentamt
European Patent Office
Office européen des brevets

(11) **EP 3 939 150 B1**

(12) **EUROPÄISCHE PATENTSCHRIFT**

(45) Veröffentlichungstag und Bekanntmachung des Hinweises auf die Patenterteilung:
**03.05.2023 Patentblatt 2023/18**

(21) Anmeldenummer: **20711132.9**

(22) Anmeldetag: **11.03.2020**

(51) Internationale Patentklassifikation (IPC):
**H02K 15/00** (2006.01)

(52) Gemeinsame Patentklassifikation (CPC):
**H02K 15/0087**

(86) Internationale Anmeldenummer:
**PCT/EP2020/056557**

(87) Internationale Veröffentlichungsnummer:
**WO 2020/187670 (24.09.2020 Gazette 2020/39)**

(54) **APPARATUR ZUM BIEGEN VON IN RINGFÖRMIGEN LAGEN ANGEORDNETEN STABLEITERENDEN EINES STATORS EINER ELEKTRISCHEN MASCHINE**

APPARATUS FOR BENDING ENDS, ARRANGED IN ANNULAR LAYERS, OF BAR CONDUCTORS OF A STATOR OF AN ELECTRICAL MACHINE

APPAREILLAGE POUR PLIER LES EXTRÉMITÉS DE CONDUCTEURS EN FORME DE BARRES DISPOSÉES EN COUCHES ANNULAIRES D'UN STATOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2019 DE 102019203575**

(43) Veröffentlichungstag der Anmeldung:
**19.01.2022 Patentblatt 2022/03**

(73) Patentinhaber: **FELSOMAT GmbH & Co. KG 75203 Königsbach-Stein (DE)**

(72) Erfinder:
• **PESCHINA, Jürgen
75438 Knittlingen (DE)**
• **HABERSTROH, Peter
75245 Neulingen (DE)**

(74) Vertreter: **Kohler Schmid Möbus Patentanwälte Partnerschaftsgesellschaft mbB
Gropiusplatz 10
70563 Stuttgart (DE)**

(56) Entgegenhaltungen:
EP-A2- 1 117 172    US-A1- 2018 375 409
US-B2- 8 327 677

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Apparatur zum Biegen von in wenigstens vier ringförmigen Lagen angeordneten Enden von geraden oder gebogenen Stableitern eines Stators einer elektrischen Maschine, insbesondere eines Elektromotors oder Generators,

wobei die Apparatur einen Halter, insbesondere Klemmhalter, für den Stator umfasst,
wobei die Apparatur wenigstens vier bezüglich einer Zentralachse konzentrisch angeordnete Kopplungskörper umfasst, die jeweils an einem vorderen Ende eine Vielzahl von ringförmig angeordneten Kopplungsausnehmungen zum Ergreifen der Enden der Stableiter je einer der ringförmigen Lagen aufweist, und wobei die Apparatur für jeden Kopplungskörper jeweils eine erste Antriebseinrichtung zum Verfahren des Kopplungskörpers in Achsrichtung der Zentralachse und eine zweite Antriebseinrichtung zum Rotieren des Kopplungskörpers um die Zentralachse aufweist, so dass alle Kopplungskörper unabhängig voneinander axial verfahren und rotiert werden können.

Eine solche Apparatur ist aus US 8,327,677 B2 bekannt geworden.

Elektrische Maschinen, insbesondere Elektromotoren, gewinnen insbesondere im Bereich des Verkehrs an Bedeutung, da mit ihnen lokal emissionsfrei elektrische Energie in Kraft, etwa eine Antriebskraft, umgewandelt werden kann.

Elektrische Maschinen basieren allgemein auf elektromagnetischer Wechselwirkung und Induktion. Eine typische elektrische Maschine verfügt über einen Rotor, in welchem Permanentmagnete angeordnet sind, welcher sich gegenüber einem Stator dreht, in welchem elektrische Spulen angeordnet sind, wobei die Spulen als Elektromagnete wirken können. Beim Elektromotor wird typischerweise Strom durch die Spulen des Stators geleitet, und der Rotor erfährt dadurch eine Kraft, die ihn in dreht. Bei einem Generator erzeugt der sich drehende Rotor in den Spulen einen elektrischen Strom.

Die Spulen des Stators können mit einem durchgehenden Draht gewickelt werden; leistungsfähigere Statoren lassen sich jedoch mittels so genannten Stableitern fertigen. Ein häufiger Typ von Stableitern sind dabei U-förmig gebogene Stableiter (auch genannt "Hairpins"), die bereits auf einer Seite eine elektrische Verbindung zwischen ihren Schenkeln einrichten; es sind aber auch aber auch ungebogene Stableiter verbreitet, die beidseitig freie Enden aufweisen.

Typischerweise werden in einem Stator eine Vielzahl von zunächst einzelnen (ungebogenen oder gebogenen) Stableitern eingesteckt, die dann an ihren freien Enden entsprechend einem vorgegebenen Verschaltungsschema miteinander elektrisch verbunden werden sollen, typischerweise durch Verschweißen. Dafür werden vorbereitend die zu verbindenden Enden (Endabschnitte) der Stableiter mechanisch in Umfangsrichtung verbogen (plastisch verformt), um Enden von Stableitern aus benachbarten radialen Lagen, die zunächst in Umfangsrichtung noch Abstände aufweisen, einander in Umfangsrichtung anzunähern. Für eine entsprechende Maschine zum Biegen von Stableiterenden hat sich auch die Bezeichnung "Twistmaschine" entwickelt.

Die US 8,327,677 B2 beschreibt eine Twistmaschine, bei der vier konzentrische radiale Lagen von Stableitern im Umfangsrichtung gebogen werden können; für jede Lage ist ein eigene Kopplungsvorrichtung vorgesehen, die mit ringförmig angeordneten Ausnehmungen die Stableiterenden einer Lage, also die Stableiterenden auf einem gleichem Radius, ergreifen kann. Jede Kopplungsvorrichtung wird dabei mit einer eigenen Maschinenachse gedreht und mit einer eigenen Maschinenachse axial verfahren. Insgesamt acht Servomotoren sind dafür auf einem Maschinenrahmen befestigt. Die Dreh- und Verfahr-Betätigung der einzelnen Kopplungsvorrichtungen erfolgt dabei jeweils über eigene, radial ausgreifende Arme, wobei nicht näher beschrieben wird, wie die Drehbetätigung von der Verfahrbetätigung antriebsseitig entkoppelt wird.

Die beschriebene Twistmaschine benötigt einen großen Bauraum und besitzt eine aufwändige und aufgrund der Hebelmechanik unflexible Konstruktion. US 2018/375409 A1 und EP 1,117,172 A2 offenbaren jeweils den Oberbegriff des Anspruchs 1.

Aufgabe der Erfindung

Es ist Aufgabe der Erfindung, eine Apparatur zum Biegen von Stableiterenden zur Verfügung zu stellen, die einen einfacheren und kompakteren Aufbau aufweist.

Beschreibung der Erfindung

Diese Aufgabe wird gelöst durch eine Apparatur der eingangs genannten Art, die dadurch gekennzeichnet ist,

dass für jeden Kopplungskörper eine eigene Antriebsplattform vorhanden ist, wobei der Kopplungskörper an der jeweiligen Antriebsplattform um die Zentralachse drehbar, aber axial fest gelagert ist,
dass die Antriebsplattformen an einem gemeinsamen ortsfesten Klettergestänge entlang der Zentralachse einzeln verfahrbar angeordnet sind, wobei das Klettergestänge wenigstens zwei parallel zur Zentralachse angeordnete Kletterstangen umfasst, und dass eine jeweilige Antriebsplattform aufweist

- die erste Antriebseinrichtung und die zweite Antriebseinrichtung des zur Antriebsplattform gehörenden Kopplungskörpers;
- wenigstens zwei Kletterstücke zum axialen Verfahren der Antriebsplattform, wobei die Kletterstücke axial an der Antriebsplattform festgelegt sind und jeweils an eine der Kletterstangen gekoppelt sind, und wobei die Kletterstücke von der ersten Antriebseinrichtung angetrieben sind, und

- ein Getriebe zum Rotieren des Kopplungskörpers gegenüber der Antriebsplattform, wobei das Getriebe an den Kopplungskörper gekoppelt ist und von der zweiten Antriebseinrichtung angetrieben ist.

Bei der erfindungsgemäßen Apparatur (Twistmaschine) sind mehrere Antriebsplattformen eingerichtet, die einzeln an einem gemeinsamen Klettergestänge und damit einem zugehörigen Maschinenrahmen axial verfahrbar sind. Jedem Kopplungskörper ist eine eigene Antriebsplattform zugeordnet, auf der er gelagert ist.

Auf der jeweiligen Antriebsplattform sind die erste (lokale) Antriebseinrichtung für das axiale Verfahren der Antriebsplattform, etwa ein erster Servomotor, und die zweite (lokale) Antriebseinrichtung für das Rotieren des Kopplungskörpers auf der Antriebsplattform, etwa ein zweiter Servomotor, installiert. Beim axialen Verfahren der Antriebsplattform mittels der ersten Antriebseinrichtung wird der zugehörige, auf der Antriebsplattform (zumindest bezüglich der Krafteintragsrichtung des Biegeprozesses) axial fest gelagerte Kopplungskörper mitgenommen, also gleichermaßen axial verfahren. Mit der zweiten Antriebseinrichtung kann der zugehörige Kopplungskörper gegen seine Antriebsplattform rotiert werden, wobei die Antriebsplattform insbesondere über das Klettergestänge drehfest an Maschinenrahmen gehalten ist. Dadurch kann der Kopplungskörper gegenüber dem Maschinenrahmen und insbesondere dem Stator gedreht werden.

Mit diesem Aufbau kann auf einfache Weise das axiale Verfahren und die Rotation des Kopplungskörpers mittels der Antriebsplattform unabhängig voneinander, und auch unabhängig von den übrigen Kopplungskörpern auf weiteren Antriebsplattformen, erfolgen. Es werden keine radial ausgreifenden Arme benötigt, die einen großen Bauraum beanspruchen. Alle Antriebsplattformen können insbesondere auf demselben Klettergestänge axial verfahren, was besonders kompakt ausgeführt werden kann und sehr kostengünstig ist.

*Bevorzugte Ausführungsformen*

Bevorzugt ist eine Ausführungsform, die vorsieht,

dass zumindest die äußeren Kopplungskörper jeweils einen im Wesentlichen zylindermantelförmigen vorderen Teil mit einem ersten Durchmesser ED entsprechend einem Durchmesser der ringförmigen Anordnung der Kopplungsausnehmungen und einen ebenfalls im Wesentlichen zylindermantelförmigen hinteren Teil mit einem zweiten Durchmesser ZD aufweisen, mit ZD>ED,

dass der innerste Kopplungskörper ebenfalls einen vorderen Teil und einen hinteren Teil aufweist, insbesondere wobei dieser vordere Teil ebenfalls im Wesentlichen zylindermantelförmig mit einem ersten Durchmesser EDI entsprechend einem Durchmesser der ringförmigen Anordnung der Kopplungsausnehmungen des innersten Kopplungskörpers und dieser hintere Teil ebenfalls im Wesentlichen zylindermantelförmig mit einem zweiten Durchmesser ZDI ausgebildet sind, bevorzugt mit ZDI>EDI,

dass die vorderen Teile und die hinteren Teile der Kopplungskörper jeweils ineinander gesteckt angeordnet sind,

und dass das jeweilige Getriebe zu einem Kopplungskörper jeweils am hinteren Teil des Kopplungskörpers ankoppelt. Die vorderen Teile der Kopplungskörper können kompakt ineinander gesteckt werden, entsprechend den ringförmigen Lagen der Stabelemente am Stator. Mit den hinteren Teilen können die Kopplungskörper für eine Anlenkung bzw. Lagerung an den Antriebsplattformen optimiert werden, insbesondere durch einen größeren Durchmesser für eine bessere mechanische Stabilität. Für eine kompakte Bauform werden auch die hinteren Teile ineinander gesteckt. Die (koaxial) ineinander gesteckten zylindermantelförmigen Teile der Kopplungskörper gestatten eine gegenseitige axiale Führung, und erlauben es, die Kopplungskörper gleichzeitig gegeneinander zu rotieren und gegeneinander axial zu verfahren. Man beachte, dass der innerste Kopplungskörper auch beispielsweise aus Vollmaterial gefertigt sein kann; für einen leichten und materialsparenden Aufbau sind jedoch auch hier zylindermantelförmige Teile bevorzugt.

Besonders bevorzugt ist eine Ausführungsform, bei der zumindest die Antriebsplattformen der äußeren Kopplungskörper jeweils einen Durchbruch zur Durchführung von einem oder mehreren weiter innen gelegenen Kopplungskörpern aufweisen. Dadurch wird ein besonders kompakter Bau ermöglicht.

Bei einer vorteilhaften Ausführungsform sind die Kletterstangen als Gewindestangen ausgebildet, und die Kletterstücke als Gewindemuttern. Dadurch ist ein präzises, insbesondere spielarmes Verfahren der Antriebsplattformen möglich. Die Gewindestangen sind üblicherweise ortsfest und rotationsfest im Maschinenrahmen befestigt, und die (axial auf der jeweiligen Antriebsplattform festgelegten) Kletterstücke werden auf der jeweiligen Antriebsplattform mittels der ersten Antriebseinrichtung gedreht, um die Antriebsplattform axial zu verfahren.

Bei einer alternativen, ebenfalls bevorzugten Ausführungsform sind die Kletterstangen als Zahnstangen ausgebildet, und die Kletterstücke als Zahnräder oder Schneckenräder. Dadurch ist ein besonders einfaches und robustes Verfahren der Antriebsplattformen möglich. Die Zahnstangen sind üblicherweise ortsfest im Maschinenrahmen befestigt, und die (axial auf der jeweiligen Antriebsplattform festgelegten) Zahnräder oder Schneckenräder werden auf der jeweiligen Antriebsplattform mittels der ersten Antriebseinrichtung gedreht, um die Antriebsplattform axial zu verfahren.

Besonders bevorzugt ist eine Ausführungsform, bei der die Kletterstangen symmetrisch um die Zentralachse angeordnet sind,

insbesondere wobei genau zwei einander gegenüber liegende Kletterstangen vorhanden sind. Durch die symmetrische Anordnung kann ein seitengleicher Krafteintrag in die Kletterstangen sichergestellt werden, was eine Verkippung der Antriebsplattform vermeidet und damit ein exaktes Verfahren der Antriebsplattform sicherstellt, wodurch eine präzise Umsetzung der axialen Ausgleichsbewegung beim Biegen der Stableiterenden erreicht wird, und entsprechend eine exakte Biegung der Stableiterenden erreicht wird.

Bei einer bevorzugten Ausführungsform ist auf einer jeweiligen Antriebsplattform ein erster Zwischenring drehbar um die Zentralachse gelagert, wobei der erste Zwischenring von der ersten Antriebseinrichtung angetrieben ist, und wobei die Kletterstücke jeweils an unterschiedlichen Stellen an den ersten Zwischenring gekoppelt sind,

insbesondere wobei die Kletterstücke symmetrisch zur Zentralachse am ersten Zwischenring angeordnet sind. Mittels des ersten Zwischenrings kann die Kraft der ersten Antriebseinrichtung gleichmäßig auf die Kletterstücke verteilt werden, und eine Verkippung der Antriebsplattform durch ungleichmäßigen Krafteintrag wird vermieden. Falls mehr als zwei Kletterstangen und Kletterstücke eingerichtet sind, sind bevorzugt alle Kletterstücke an unterschiedlichen Stellen an den ersten Zwischenring gekoppelt. Der erste Zwischenring kann als teilverzahnter oder voll verzahnter Zahnring ausgebildet sein.

Bevorzugt ist auch eine Ausführungsform, bei der das jeweilige von der zweiten Antriebseinrichtung angetriebene Getriebe ein Zahnrad oder eine Zahnstange umfasst und in eine Verzahnung am Kopplungskörper oder an einem mit dem Kopplungskörper starr verbundenen zweiten Zwischenring eingreift. Die Kraftübertragung auf den Kopplungskörper für dessen Rotation über die Zähne eines Zahnrads oder die Zähne einer Zahnstange - und eine geeignete Gegenverzahnung am Kopplungskörper oder an einem zweiten Zwischenring - ist baulich besonders einfach und robust. Der zweite Zwischenring kann als teilverzahnter oder voll verzahnter Zahnring ausgebildet sein. Bei Verwendung einer Zahnstange kann die Drehung des Kopplungskörpers über einen Linearmotor eingestellt werden.

Vorteilhaft ist auch eine Ausführungsform, bei der die Kopplungsausnehmungen eines jeweiligen Kopplungskörpers an einem Endstück ausgebildet sind, das auswechselbar am übrigen Kopplungskörper befestigt ist. Durch Auswechseln der Endstücke der Kopplungskörper kann auf einfache Weise eine Anpassung an einen anderen Typ von Stator erfolgen. Bevorzugt umfasst das vordere Endstück vollständig einen zylindermantelförmigen, vorderen Teil des Kopplungskörpers, und bevorzugt auch einen Zwischenflansch zur Anbindung eines hinteren, zylindermantelförmigen Teils des Kopplungskörpers.

Vorteilhaft ist weiterhin eine Ausführungsform, bei der die Kopplungsausnehmungen am vorderen Ende eines jeweiligen Kopplungskörpers kronenartig ausgebildet sind. Der kronenartige Aufbau benötigt nur wenig Material und erlaubt zudem die Biegung von in radialer Richtung vergleichsweise eng stehender Stableiterenden. Bei der kronenartigen Ausbildung sind die Kopplungsausnehmungen nur in Umfangsrichtung begrenzt, nicht aber in radialer Richtung. Alternativ können die Kopplungsausnehmungen auch als vollständig (radial und in Umfangsrichtung) umschlossene Vertiefungen ausgebildet sein; hierdurch wird eine besonders sicheres Ergreifen der Stableiterenden sichergestellt.

Bei einer bevorzugten Ausführungsform ist vorgesehen, dass die Apparatur weiterhin ein Schienensystem mit wenigstens zwei ortsfesten, parallel zur Zentralachse verlaufenden Schienen umfasst, und weiterhin an jeder Antriebsplattform wenigstens zwei Gegenstücke befestigt oder ausgebildet sind, die jeweils an einer der Schienen axial verfahrbar angeordnet sind. Durch die am Maschinenrahmen ortsfest angeordneten Schienen kann eine besonders gute (zum Klettergestänge zusätzliche) Stabilisierung der Antriebsplattformen gegen Verkippen erreicht werden. Typischerweise umgreifen die Gegenstücke die Schienen, und/oder greifen in die Schienen ein.

Bevorzugt ist auch eine Ausführungsform, die vorsieht,

dass der Halter für den Stator an einer Zusatzplattform angeordnet ist, wobei die Zusatzplattform ebenfalls am Klettergestänge in Achsrichtung der Zentralachse verfahrbar angeordnet ist,

und dass die Zusatzplattform eine Zusatzantriebseinrichtung und wenigstens zwei Zusatzkletterstücke zum axialen Verfahren der Zusatzplattform aufweist, wobei die Zusatzkletterstücke axial an der Zusatzplattform festgelegt sind und jeweils an eine der Kletterstangen gekoppelt sind, und wobei die Zusatzkletterstücke von der Zusatzantriebseinrichtung angetrieben sind. Durch die axial verfahrbare Zusatzplattform kann der Betrag für eine axiale Bewegung der Kopplungskörper beim Biegen der Lagen der Stableiter reduziert werden. Der Halter macht dann die Hauptbewegung für den Biegeprozess, und die Kopplungskörper vollziehen nur noch kleine Differenzbewegungen. Die Befestigung des Halters auf der Zusatzplattform (und auch des Stators im Halter) ist üblicherweise drehfest. Alternativ kann eine Zusatzplattform für den Halter auch (axial und rotatorisch) ortsfest am Klettergestänge befestigt sein.

Bei einer Weiterbildung einer Ausführungsform der Apparatur mit Schienensystem und axial verfahrbarer Zusatzplattform für den Halter sind an der Zusatzplattform weiterhin wenigstens zwei Zusatzgegenstücke befestigt oder ausgebildet, die jeweils an einer der Schienen axial verfahrbar angeordnet sind. Dadurch kann die Zusatzplattform wiederum besser mechanisch stabilisiert werden, insbesondere gegen Verkippen.

In den Rahmen der vorliegenden Erfindung fällt auch eine Verwendung einer erfindungsgemäßen, oben beschriebenen Apparatur zum Biegen von in wenigstens vier ringförmigen Lagen angeordnete Enden von geraden oder gebogenen Stableitern eines Stators einer elektrischen Maschine, insbesondere eines Elektromotors oder Generators,

> wobei der Stator im Halter angeordnet ist,
> wobei die Enden der im Stator angeordneten Stableiter einer jeweiligen ringförmigen Lage von den Kopplungsausnehmungen jeweils eines Kopplungskörpers übergriffen werden,
> und wobei die Axialbewegungen und die Rotationsbewegungen der Kopplungskörper unabhängig voneinander angesteuert werden,
> insbesondere wobei die Drehrichtungen der radial aufeinander folgenden Kopplungskörper alternieren. Durch das Drehen und axiale Verfahren der Kopplungskörper können die Enden der Stableiter in gewünschter Weise gebogen werden. Die Drehung stellt ein, wie weit die Stableiterenden in Umfangsrichtung verbogen werden. Durch das axiale Verfahren wird eine effektive axiale Verkürzung der Stableiter beim Verbiegen in Umfangsrichtung ausgeglichen, so dass die Stableiterenden über den Biegeprozess an den Kopplungsausnehmungen nicht losgelassen werden. Bevorzugt weisen die Stableiter zu Beginn des Biegeprozesses unterschiedliche axiale Längen auf, und der Biegeprozess, einschließlich des axialen Nachführens der Kopplungskörper, erfolgt in einer Weise, dass die Enden der

Stableiter zum Ende des Biegeprozesses sich auf gleicher axialer Höhe befinden. Im Rahmen der Erfindung können alle Maschinenachsen (Rotation und axiales Verfahren für jede Antriebsplattform) für einen optimalen Biegeprozess einzeln angesteuert werden.

Bevorzugt ist dabei eine Variante dieser Verwendung, die vorsieht,
dass beim Biegen der Enden der Stableiter des Stators die Hübe der Axialbewegungen der Kopplungskörper von innen nach außen hin zunehmen, insbesondere wobei die Drehwinkelintervalle der Rotationsbewegungen der Kopplungskörper von innen nach außen hin zunehmen. Über die nach außen hin zunehmenden axialen Hübe kann eine größere effektive Längenänderung der gebogenen Stableiter nach radial weiter außen hin berücksichtigt werden; bei (ungefähr) gleicher Winkelauslenkung verkürzen sich weiter außen liegende Stableiter durch Biegen in Umfangsrichtung stärker als weiter innen liegende Stableiter aufgrund der weiter außen größeren absoluten Biegewege in Umfangsrichtung. Die tatsächlich angesteuerten Drehwinkelintervalle der Rotationsbewegungen können im Rahmen der Erfindung ein Überbiegen der Enden der Stableiter über die gewünschte Endposition hinaus beinhalten, um eine elastische Rückfederung der Enden nach der Biegebearbeitung zu berücksichtigen. Durch die Vergrößerung der tatsächlich angesteuerten Drehwinkelintervalle nach radial außen hin können insbesondere nach der Rückfederung identische bleibende Drehwinkelintervalle in allen Lagen, und damit eine besonders exakte Fertigung, erreicht werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Fig. 1        zeigt eine schematische Schrägansicht einer beispielhaften Ausführungsform einer erfindungsgemäßen Apparatur;

Fig. 2A      zeigt eine schematische Schrägansicht des Stators von Fig. 1 mit darin angeordneten Stableitern für die Erfindung;

Fig. 2B      zeigt den Stator von Fig. 2A in einer schematischen Ansicht von unten;

Fig. 2C      zeigt einen alternativen Stator in schematischer Schrägansicht für die Erfindung, wobei die Stabelemente gebogen als "Hairpins" ausgebildet sind;

Fig. 3A      zeigt eine schematische Explosionsdarstellung von vorderen Endstücken von Kopplungskörpern im Längsschnitt für die Apparatur von Fig. 1;

Fig. 3B      zeigt einen schematischen Längsschnitt durch ineinander gesteckte Kopplungskörper für die Apparatur von Fig. 1;

Fig. 4        zeigt einen schematischen Längsschnitt durch eine Antriebsplattform einschließlich zugehörigem Kopplungskörper für die Apparatur gemäß Fig. 1;

Fig. 5A      zeigt eine schematische Aufsicht auf die Antriebsplattform von Fig. 4;

Fig. 5B      zeigt eine Schematische Unteransicht auf die Antriebsplattform von Fig. 4;

Fig. 6A      illustriert schematisch die axiale Verkürzung von Stableitern beim Biegen bei einer erfindungsgemäßen Verwendung der Apparatur von Fig. 1, und eine erfindungsgemäße Wahl von axialen Hüben der Kopplungskörper;

Fig. 6B      illustriert schematisch die elastische Rückfederung von Stableitern beim Biegen bei einer erfindungsgemäßen Verwendung der Apparatur von Fig. 1, und eine erfindungsgemäße Wahl von Überbiegungs-Winkelintervallen der Kopplungskörper.

In den Figuren ist beispielhaft eine Ausführungsform einer erfindungsgemäßen Apparatur zum Biegen von Stableiterenden eines Stators für eine elektrische Maschine, etwa einen Elektromotor oder einen elektrischen Generator, schematisch dargestellt.

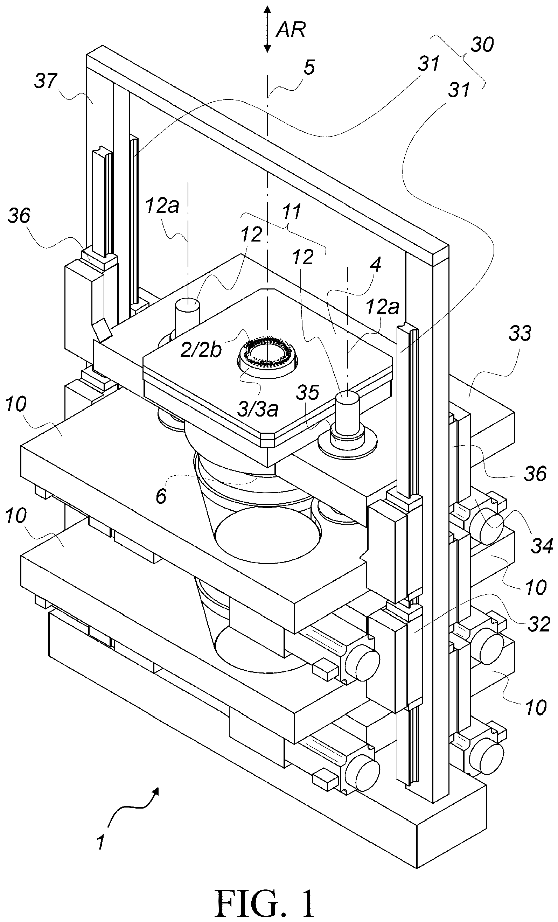

Die **Fig. 1** zeigt eine schematische Schrägansicht der Apparatur 1. Mit der Apparatur 1 sollen die Enden von Stableitern 2, die in einen Stator 3 mit einem im Wesentlichen zylindermantelförmigen Stator-Grundkörper 3a eingesteckt sind, gebogen werden. In der Fig. 1 sind die oberen freien Enden 2b der Stableiter 2 zu sehen; die Apparatur dient jedoch zum Biegen der in Fig. 1 verdeckten, unteren freien Enden der Stableiter 2 (man beachte jedoch, dass es möglich ist, den Stator 3 auch umgekehrt in die Apparatur 1 einzusetzen, so dass die zuvor oberen Enden 2b der Stableiter 2 dann zu unteren Enden werden, die dann mit der Apparatur 1 ebenfalls gebogen werden können).

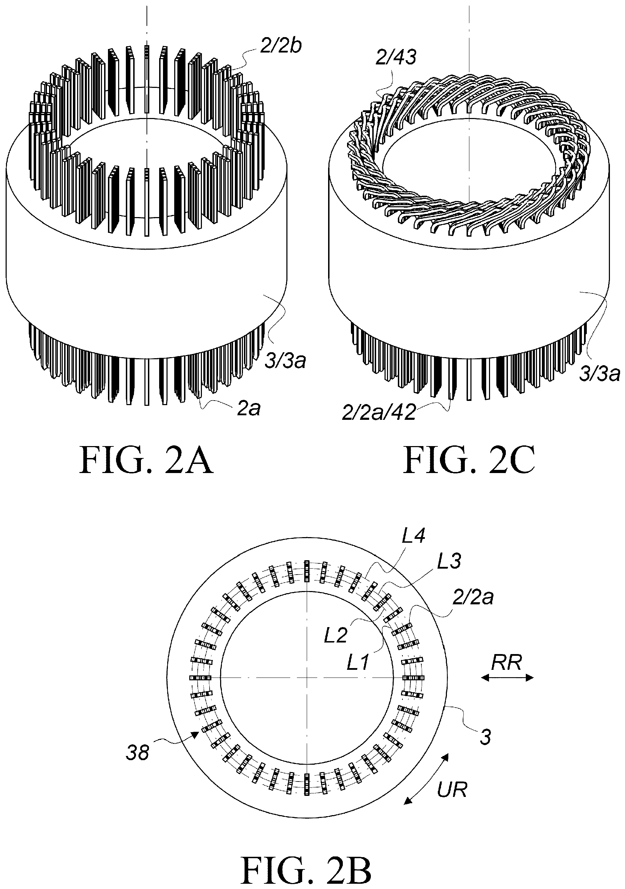

Die **Fig. 2A** zeigt ergänzend den Stator 3 und die darin gehaltenen Stableiter 2, die mit unteren Enden (Endabschnitten) 2a aus dem Stator-Grundkörper 3a des Stators 3 nach unten herausragen, und die mit der Apparatur von Fig. 1 gebogen werden können. Die **Fig. 2B** zeigt eine Ansicht auf den Stator 3 von unten.

Die zu biegenden unteren Enden 2a der Stableiter 2 sind im noch ungebogenen Zustand jeweils in radialer Richtung RR verlaufenden Reihen 38 aufgereiht, und sind in entsprechende, in radialer Richtung RR längliche Ausnehmungen für jede Reihe 38 im Stator-Grundkörper 3a eingesteckt. In jeder Reihe 38 sind hier vier Enden 2a von Stableitern 2 angeordnet, entsprechend vier ringförmigen Lagen L1, L2, L3, L4 von Enden 2a von Stableitern 2.

Durch die erfindungsgemäße Apparatur können die unteren Enden 2a der Stableiter 2 in Umfangsrichtung UR (auch genannt azimuthale Richtung) gebogen werden. In einem typischen Biegeprozess werden beispielsweise die Enden 2a der Lage L1 um einen halben Reihenzwischenwinkel gegen den Uhrzeigersinn, und die Enden 2a der benachbarten Lage L2 um einen halben Reihenzwischenwinkel im Uhrzeigersinn verbogen; ebenso werden die Enden 2a der Lage L3 um einen halben Reihenzwischenwinkel gegen den Uhrzeigersinn, und die Enden 2a der benachbarten Lage L4 um einen halben Reihenzwischenwinkel im Uhrzeigersinn verbogen. Dass die Biegerichtung zwischen den Lagen L1-L4 alterniert, ist im Rahmen der Erfindung bevorzugt. An ihren durch bleibende Verformung erreichten Positionen (nicht dargestellt) können die überlappenden Enden 2a der Lagen L1 und L2 und auch der Lagen L3 und L4 dann miteinander verschweißt werden.

Wieder bezugnehmend auf Fig. 1, ist der Stator 3 in einem Halter 4, hier einem Klemmhalter, befestigt. Dieser Halter 4 ist auf einer Zusatzplattform 33 angeordnet, die weiter unten näher erläutert wird.

Die Apparatur 1 umfasst in der gezeigten Ausführungsform vier so genannte Antriebsplattformen 10; in anderen Ausführungsformen können auch noch mehr Antriebsplattformen (für das Biegen von entsprechend mehr radialen Lagen von Stableiterenden) vorgesehen sein.

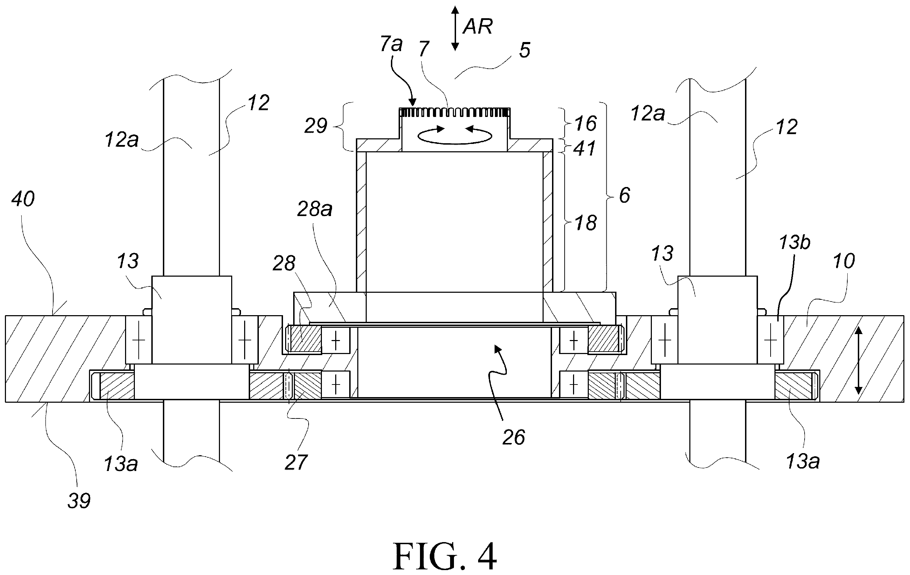

Die Antriebsplattformen 10 sind entlang einer Zentralachse 5, die mittig durch den Stator 3 und hier vertikal verläuft, verfahrbar. Dabei verfahren die Antriebsplattformen 10 auf einem gemeinsamen Klettergestänge 11, das hier mit zwei Kletterstangen 12 ausgebildet ist. Die Kletterstangen 12 sind hier als Gewindestangen ausgebildet (das Außengewinde der Kletterstangen 12 ist zur Vereinfachung nicht näher dargestellt). Die Kletterstangen 12 verlaufen parallel zur Zentralachse 5, wobei die Zentralachse 5 und Mittelachsen 12a der Kletterstangen 12 in einer gemeinsamen Ebene liegen (vgl. die Längsschnittebene/Zeichenebene von Fig. 4 unten), und sind in einem Maschinenrahmen 37 ortsfest angeordnet.

Zusätzlich werden die Antriebsplattformen 10 mittels eines Schienensystems 30 geführt, das hier insgesamt vier Schienen 31 umfasst, die am Maschinenrahmen 37 ortsfest ausgebildet sind (eine der Schienen 31 ist in Fig. 1 größtenteils verdeckt).

Die Antriebsplattformen 10 sind jeweils mit einer ersten Antriebseinrichtung zum axialen Verfahren der jeweiligen Antriebsplattform 10 entlang des Klettergestänges 11 ausgebildet, und weiterhin mit jeweils mit einer zweiten Antriebseinrichtung zum Rotieren eines auf der jeweiligen Antriebsplattform 10 gelagerten Kopplungskörpers 6 (zum größten Teil verdeckt in Fig. 1, siehe aber weiter unten).

Die Zusatzplattform 33 verfügt über eine Zusatzantriebseinrichtung 34, hier einen Servomotor, die in nicht näher dargestellter Weise (etwa über einen Zusatzzwischenring, der koaxial zur Zentralachse 5 gelagert ist) an zwei Zusatzkletterstücke 35 gekoppelt ist. Die Zusatzkletterstücke 35 sind auf der Zusatzplattform 33 in axialer Richtung AR auf der Zusatzplattform 33 festgelegt (d.h. können gegen die Zusatzplattform 33 in axialer Richtung AR nicht verfahren), sind aber über die Zusatzantriebseinrichtung 34 drehbar. Die Zusatzkletterstücke 35 sind jeweils als Gewindemuttern (mit einem Innengewinde) ausgebildet und auf die Kletterstangen 12 aufgeschraubt. Durch Drehen der Zusatzkletterstücke 35 mittels der Zusatzantriebseinrichtung 34 kann daher die Zusatzplattform 33, und mit ihr der Halter 4 und der Stator 3 einschließlich seiner Stableiter 2, axial verfahren werden.

Die Zusatzplattform 33 verfügt dabei weiterhin über Zusatzgegenstücke 36, die hier zwei der Schienen 31 des Schienensystems 30 umgreifen und dadurch die Zusatzplattform 33 führen und zusätzlich gegen ein Verkippen sichern.

**Fig. 2C** zeigt einen alternativen Stator 3 für die Erfindung, insbesondere für die Apparatur von Fig. 1. Hierbei sind die Stableiter 2 näherungsweise U-förmig gebogen ausgebildet ("Hairpins"), wobei die Schenkel 42 der Stableiter 2 nach unten ragen und mit umzubiegenden unteren Enden 2a aus dem Stator-Grundkörper 3a ragen. Oben am Stator 3 sind Bügel 43 der Stableiter 2 ausgebildet, die die beiden Schenkel 42 eines Stableiters 2 jeweils verbinden. Bei diesem Typ von Stableiter 2 ist lediglich ein Biegeprozess und ein Verschweißen im Bereich der freien unteren Enden 2a der Stableiter 2 nötig, nicht jedoch im Bereich von oberen Enden.

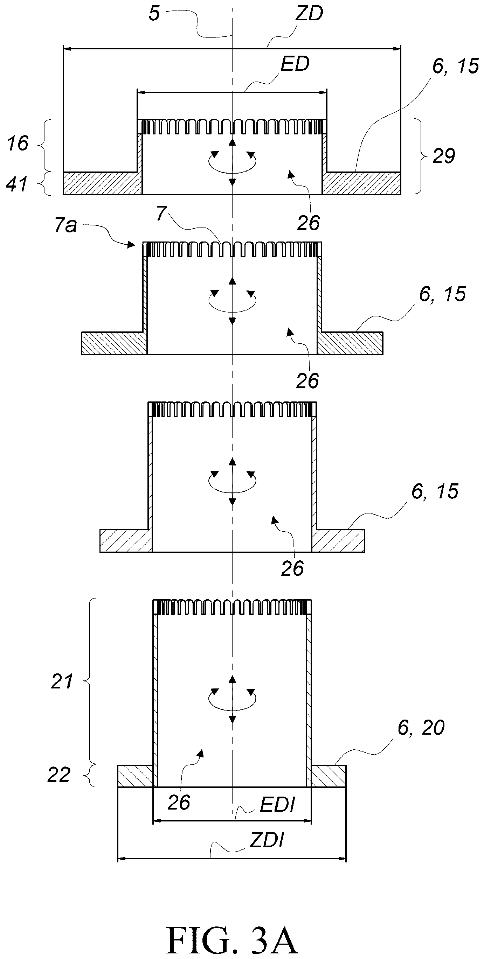

Die **Fig. 3A** zeigt in einer Explosionsdarstellung vordere (hier obere) Endstücken 29 von Kopplungskörpern 6 für die Apparatur von Fig. 1. Die Endstücke 29 umfassen hier jeweils einen vorderen Teil 16, der im Wesentlichen zylindermantelförmig ausgebildet ist, und einen Zwischenflansch 41.

Die oberen Teile 16 sind hier jeweils mit einer so genannte Krone 7a an ihren vorderen, in Fig. 3a oberen Enden ausgebildet, wobei die Krone 7a jeweils zwischen zwei Zinken einen axialen Rücksprung als Kopplungsausnehmung 7 ausbildet. Insgesamt verfügt jede Krone 7a über so viele Kopplungsausnehmungen 7 wie es radiale Reihen von (zunächst unverformten) Stableiterenden unten am Stator gibt (vgl. Fig. 2B hierzu). Mit den Zinken greift eine jeweilige Krone 7a in die Zwischenräume zwischen den radialen Reihen von Enden von Stableitern ein, und die Enden der Stableiter liegen dann entsprechend in den Kopplungsausnehmungen 7 (nicht näher dargestellt).

Der Durchmesser einer jeweiligen Krone 7a, bzw. der Durchmesser des vorderen Teils 16 des Kopplungskörpers 6, hier bezeichnet als erster Durchmesser ED (bzw. als EDI beim innersten Kopplungskörper 20), entspricht dabei dem Durchmesser der jeweiligen zugehörigen, ringförmigen Lage der Enden der Stableiter. Durch gegenseitiges Verdrehen der Kopplungskörper 6 bzw. der Kronen 7a können die ergriffenen Enden der Stableiter in Umfangsrichtung in allen Lagen individuell gebogen werden, wobei die Kopplungskörper 6 in allen Lagen individuell axial nachgeführt werden können.

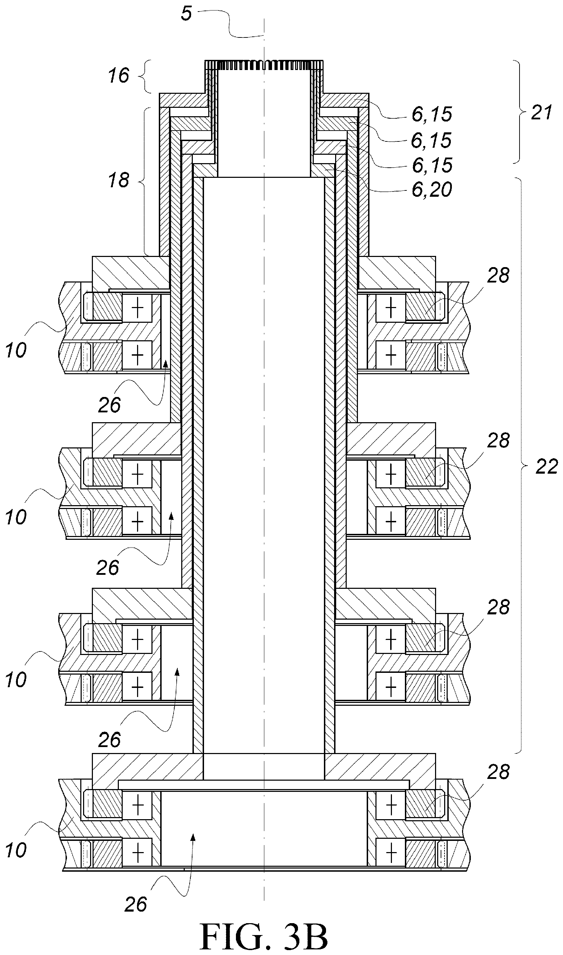

Die oberen Teile 16 gehen unten jeweils in einen Zwischenflansch 41 über. An einem jeweiligen Zwischenflansch 41 wird ein ebenfalls zylindermantelförmiger hinterer Teil des Kopplungskörpers 6 austauschbar befestigt, etwa angeschraubt (nicht dargestellt in Fig. 3A, vgl. aber hierzu Fig. 3B oder Fig. 4); dieser hintere Teil besitzt den gleichen Außendurchmesser wie der Zwischenflansch 41, in Fig. 3A eingezeichnet als zweiter Durchmesser ZD (bzw. als ZDI beim innersten Kopplungskörper 20).

Der jeweilige erste Durchmesser ED ist dabei bei jedem Kopplungskörper 6 kleiner als der jeweilige zweite Durchmesser ZD, also ED < ZD (bzw. EDI < ZDI), wodurch die Kopplungskörper 6 robust und sicher auf der Antriebsplattform gelagert werden können, gleichzeitig aber auch kleine Stableiter-Strukturen am Stator präzise gefertigt bzw. gebogen werden können.

Man beachte, dass die (radialen) ersten Durchmesser ED und die (radialen) zweiten Durchmesser ZD bei den Kopplungskörpern 6 in der Explosionsdarstellung von oben nach unten abnehmen, um die Kopplungskörper 6 im montierten Zustand radial ineinander schachteln zu können (siehe unten).

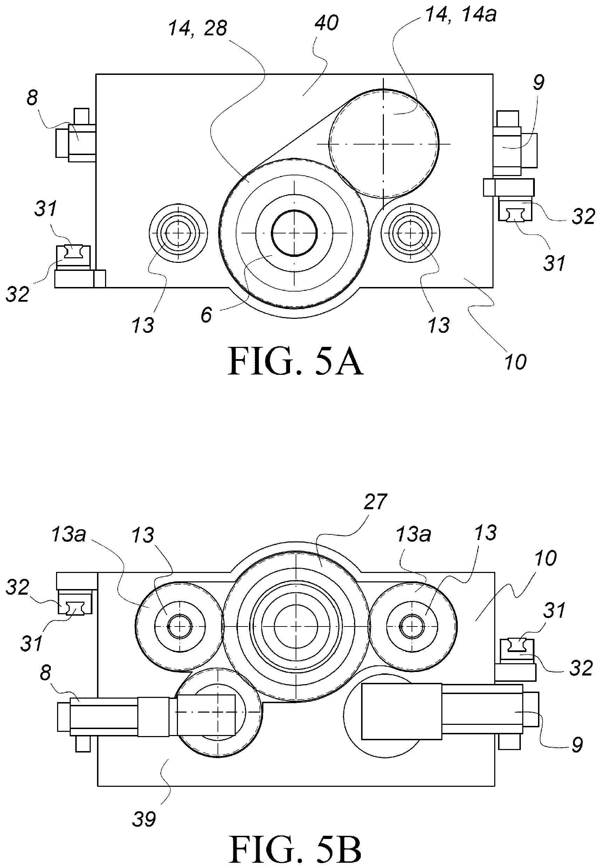

Die vorderen Teile 16 und hinteren Teile 18 der Kopplungskörper 6 im montierten Zustand sind in der **Fig. 3B** ersichtlich (beispielhaft markiert für den obersten/äußersten Kopplungskörper 6, vgl. auch Fig. 4 hierzu). Für einen kompakten Aufbau der Apparatur sind die Kopplungskörper 6 ineinander gesteckt ("geschachtelt angeordnet"), wobei jeweils die vorderen (oberen) Teile 16 der verschiedenen Kopplungskörper 6 ineinander stecken, und auch die hinteren (unteren) Teile 18 der Kopplungskörper 6 ineinander stecken (wobei sie nach unten auch auseinander heraus ragen). Die hier insgesamt vier Kopplungskörper 6 sind dabei gegeneinander rotierbar und (über eine jeweilige gewisse Weglänge) gegeneinander axial verfahrbar. Dafür sind die jeweiligen vorderen Teile 16 im Wesentlichen zylindermantelförmig ausgebildet, und auch die jeweiligen hinteren Teile 18 sind im Wesentlichen zylindermantelförmig ausgebildet. Die hinteren Teile 18 sind jeweils an einer Antriebsplattform 10 gelagert (nur teilweise eingezeichnet, vgl. dazu Fig. 4, 5A, 5B unten). Die Wände der vorderen Teile 16 benachbarter Kopplungskörper 6 liegen hier (mit gewissem Spiel) aneinander an, und auch die Wände der hinteren Teile 18 benachbarter Kopplungskörper 6 liegen hier (mit gewissem Spiel) aneinander an; dadurch wird eine gegenseitige Stützung erreicht. Alle Teile 16, 18 der vier Kopplungskörper 6 sind dabei koaxial zueinander bezüglich der Zentralachse 5 angeordnet.

Man beachte, dass in der gezeigten Ausführungsform eine zylindermantelförmige Form der vorderen Teile 16 und der hinteren Teile 18, also mit einem Durchbruch 26, nur bei den äußeren Kopplungskörpern 15 notwendig ist, um einen oder mehrere, radial weiter innen liegende Kopplungskörper 6 durchführen zu können. Beim innersten Kopplungskörper 20 kann der Kopplungskörper 20 im vorderen Teil 21 und/oder im hinteren Teil 22 beispielsweise auch aus Vollmaterial oder mit radialen Stabilisierungsstreben gefertigt sein (nicht näher dargestellt); jedoch ist auch hier eine zylindermantelförmige Form mit Durchbruch 26 (wie dargestellt) bevorzugt, um Materialaufwand und Gewicht der Apparatur gering zu halten.

Die **Fig. 4** in einer schematischen Längsschnittansicht durch die Zentralachse 5 und die Mittelachsen 12a der Kletterstangen 12 und die **Fig. 5A** in schematischer Ansicht auf die Oberseite 40 und **Fig. 5B** in schematischer Ansicht auf die Unterseite 39 illustrieren eine beispielhafte Antriebsplattform 10 der Apparatur von Fig. 1. Man beachte, dass die Apparatur von Fig. 1 hier insgesamt über vier im Wesentlichen baugleiche Antriebsplattformen 10 für die vier Kopplungskörper 6 (mit jeweils eigenen Durchmessern) verfügt, die für einen kompakten Bau hier jeweils mit einer alternierenden Orientierung am Maschinenrahmen angeordnet sind.

Die Antriebsplattform 10 verfügt über eine eigene erste Antriebseinrichtung 8, die hier an der Unterseite 39 der Antriebsplattform 10 angeordnet ist. Die erste Antriebseinrichtung 8 treibt einen ersten Zwischenring 27 an, der drehbar um die Zentralachse 5 gelagert ist. Der erste Zwischenring 27 ist hier als ein Zahnring mit einer Außenverzahnung (nicht näher dargestellt) ausgebildet, und ist hier ebenfalls an der Unterseite 39 der Antriebsplattform 10 angeordnet.

An diesen ersten Zwischenring 27 sind wiederum zwei Kletterstücke 13 gekoppelt. Die Kletterstücke 13 sind dafür jeweils an einem außenverzahnten Übertragungsring 13a starr befestigt. Die außenverzahnten Übertragungsringe 13a greifen dabei an einander gegenüberliegenden Stellen am ersten Zwischenring 27 an, wobei die Zentralachse 5 genau zwischen diesen Stellen liegt.

Die Kletterstücke 13 sind mit einem Innengewinde ausgebildet (nicht näher dargestellt), mit dem sie auf den als Gewindestangen ausgebildeten Kletterstangen 12 aufgeschraubt sind. Die Kletterstücke 13 sind an einem Kletterstücke-Lager 13b durch radialen Übergriff axial auf der Antriebsplattform 1 festgelegt. Die Kletterstücke 13 sind jedoch - zusammen mit den außenverzahnten Übertragungsringen 13a - drehbar um die Mittelachsen 12a der Kletterstanten 12 gelagert.

Über die erste Antriebseinrichtung 8 können somit beide Kletterstücke 13 um die Mittelachsen 12a gedreht und dabei um die Kletterstangen 12 geschraubt werden, wodurch die Antriebsplattform 10 mitgenommen und in axialer Richtung AR verfahren wird.

Die Antriebsplattform 1 verfügt weiterhin über eine eigene zweite Antriebseinrichtung 9, die hier ebenfalls als Servomotor ausgebildet ist, und die hier ebenfalls an der Unterseite 39 der Antriebsplattform 1 angeordnet ist. Die zweite Antriebseinrichtung 9 treibt hier unmittelbar ein Übertragungs-Zahnrad 14a an, das in einer Vertiefung an der Oberseite 40 der Antriebsplattform 1 angeordnet ist. Das Übertragungs-Zahnrad 14a greift in einen außenverzahnten zweiten Zwischenring 28 ein, der über einen Kopplungsflansch 28a starr mit dem Kopplungskörper 6 im Bereich des unteren Teils 18 verbunden ist. Der zweite Zwischenring 28 ist drehbar um die Zentralachse 5 gelagert. Der zweite Zwischenring 28 kann axiale Kräfte vom Kopplungskörper 6 nach unten in die Antriebsplattform 10 einleiten, auf der er aufliegt; entsprechend ist der Kopplungskörper 6 an der Antriebsplattform 10 axial fest (für den Biegeprozess) gelagert. Bevorzugt ist der zweite Zwischenring 28 bzw. der Kopplungskörper 6 auch gegen eine etwaige axiale Verschiebung nach oben gegenüber der Antriebsplattform 10 gesichert (etwa mit in radialer Richtung übergreifenden Anschlägen, nicht näher dargestellt).

Das Übertragungs-Zahnrad 14a und der zweite Zwischenring 28 bilden hier ein Getriebe 14 aus, mit welchem die zweite Antriebseinrichtung 9 den Kopplungskörper 6 auf der Antriebsplattform 10 um die Zentralachse 5 drehen kann.

Jede Antriebsplattform 10 weist hier zwei starr auf ihr befestigte Gegenstücke 32 auf. Jedes Gegenstück 32 umgreift eine der Schienen 31, um die Antriebplattform 10 zusätzlich zu führen und insbesondere gegen ein Verkippen (insbesondere ein Verkippen einer Oberflächennormalen der Oberseite 40 der Antriebsplattform 10 gegen die Zentralachse 5) zusätzlich zu sichern.

Der Kopplungskörper 6 ist mit seinem hinteren Teil 18 am Kopplungsflansch 28a starr befestigt. Ein vorderes (oberes) Endstück 29 des Kopplungskörpers 6 ist am oberen Ende des hinteren Teils 18 auswechselbar befestigt (etwa über Verschraubungen, nicht näher dargestellt). Das Endstück 29 umfasst hier den vorderen Teil 16 des Kopplungskörpers 6 sowie einen Zwischenflansch 41 (in welchem radial außen Verschraubungslöcher vorgesehen sein können, nicht näher dargestellt), in den der vordere Teil 16 übergeht. Am vorderen Teil 16 sind am oberen Ende die Kopplungsausnehmungen 7 bzw. die Krone 7a ausgebildet.

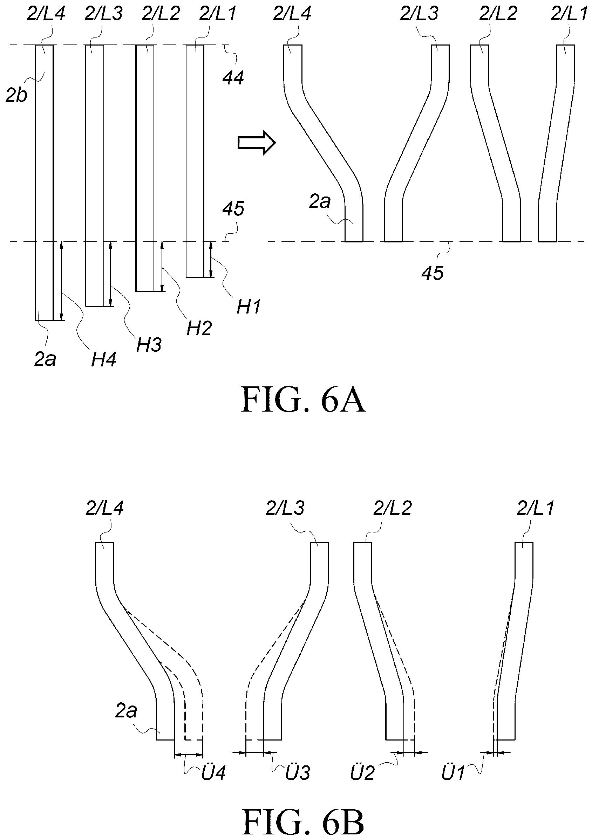

Mit der erfindungsgemäßen Apparatur können die radialen Lagen von Enden von Stableitern unabhängig voneinander gebogen werden, wobei die Kopplungskörper unabhängig voneinander axial und radial angesteuert werden können. Dies kann insbesondere genutzt werden, um die Hübe der Axialbewegungen und die Drehwinkelintervalle beim Biegen der Stableiter 2 in den verschiedenen Lagen L1 (radial innen), L2, L3 und L4 (radial außen) gezielt unterschiedlich zu wählen, wie in **Fig. 6a** und **Fig. 6b** beispielhaft schematisch gestellt. Man beachte, dass in Fig. 6A und Fig. 6B das Ausmaß von Biegungen, Längen und Verkürzungen teilweise übertrieben und teilweise untertreiben dargestellt sind, um die Effekte und Merkmale der Erfindung zu verdeutlichen.

Ausgangslage sind zunächst unverformte (noch nicht plastisch verformte) Stableiter 2 bzw. unverformte freie Enden (Endabschnitte) 2a in den Lagen L1 bis L4, vgl. Fig. 6a links. Die oberen Enden 2b der Stableiter 2 (ggf. auch Bügel von Hairpin-Stableitern, nicht näher dargestellt) befinden sich hier auf einer gleichen (axialen) Höhe 44. Die Länge der Stableiter 2 ist dabei in der radial äußersten Lage L4 am längsten, und nimmt von Lage zu Lage nach radial innen ab, so dass in der innersten Lage L1 die kürzesten Stableiter 2 vorliegen, vgl. Fig. 6a links.

Mit der Apparatur nach Fig. 1 werden nun die unteren Enden 2a der Stableiter 2 mit den Kopplungskörpern gebogen, wobei die Kopplungskörper in den verschiedenen Lagen L1-L4 initial auf unterschiedlichen Höhen an die Enden 2a der Stableiter 2 ankoppeln werden. Beim Biegeprozess werden die Stableiter 2 in Umfangsrichtung verbogen (dabei von Lage zu Lage in hier alternierender Drehrichtung), und nach dem Verbiegen sehen die Stableiter 2 einer radialen Reihe wie in Fig. 6a rechts dargestellt aus (hier zur Vereinfachung nebeneinander dargestellt). Die unteren Enden 2a der Stableiter 2 befinden sich nun auf gleicher (axialer) Höhe 45. Hierfür haben die Kopplungskörper in den verschiedenen Lagen L1-L4 unterschiedliche axiale Hübe H1-H4 durchlaufen, die mit der erfindungsgemäßen Apparatur problemlos vorgegeben werden können. Die axialen Hübe H1 bis H4 nehmen von der innersten Lage L1 von H1 von Lage zu Lage nach radial außen hin bis zur radial äußersten Lage L4 bis H4 zu.

Die in Fig. 6a gezeigte Endlage der Stableiter 2 wird aber in manchen Anwendungsfällen nur erreicht, wenn beim Biegeprozess in Umfangsrichtung ein Überbiegen erfolgt, um einen elastischen Federweg ("Rückfederung") nach dem Loslassen der Kopplungskörper zu berücksichtigen. Die Stableiter 2 müssen dann zunächst in die in Fig. 6b gestrichelt gezeigten Positionen gebogen werden, damit sich nach dem Zurückfedern die gewünschte, durchgezogen dargestellte Position bzw. zugehörige bleibende (plastische) Verformung der Stableiter 2 ergibt. Dabei ist der Federweg bzw. das notwendige Überbiegungs-Winkelintervall Ü1-Ü4 für den gezeigten Anwendungsfall für die radial innerste Lage L1 bei Ü1 an kleinsten, und nimmt von Lage zu Lage nach radial außen zu, und ist bei der radial äußersten Lage L4 bei Ü4 am größten.

Ein Basis-Drehwinkelintervall BDW, das der Winkeldifferenz von Ausgangslage und gewünschter Endlage der Stableiter 2 entspricht, ist für den gezeigten Anwendungsfall für alle Lagen L1-L4 gleich. Da aber von innen nach außen hierfür immer größere Überbiegungs-Winkelintervalle Ü1-Ü4 notwendig werden, müssen die tatsächlich angesteuerten Drehwinkelintervalle DWI der Kopplungskörper von innen nach außen zunehmen, mit

$$DWI(L1)=BDW+\ddot{U}1,$$

$$DWI(L2)=BDW+\ddot{U}2,$$

$$DWI(L3)=BDW+\ddot{U}3$$

und

$$DWI(L4)=BDW+\ddot{U}4.$$

Das in der jeweiligen Lage L1-L4 tatsächlich anzusteuernde Drehwinkelintervall DWI kann mit der erfindungsgemäßen Apparatur problemlos eingestellt werden. Nach dem Biegeprozess ist das sich ergebende, bleibende Drehwinkelintervall dann im gezeigten Anwendungsfall in allen Lagen L1-L4 gleich dem gewünschten Basis-Drehwinkelintervall BDW.

Man beachte, dass in anderen Anwendungsfällen auch anders verteilte Überbiegungs-Winkelintervalle der Lagen angewandt werden können, beispielsweise mit von radial innen nach außen abnehmenden Überbiegungs-Winkelintervallen. Die anzuwendenden Überbiegungs-Winkelintervalle können insbesondere vom Stableiterquerschnitt und Stableitermaterial oder auch von der Biegegeometrie der jeweiligen Lage abhängen.

Wenn beim Biegeprozess erfindungsgemäß die notwendige Überbiegung berücksichtigt und genau eingestellt wird, können die Stableiterenden im nächsten Fertigungsschritt näherungsweise ohne mechanische Spannungen verschweißt werden, was den Schweißprozess vereinfacht und eine genauere Fertigung des gesamten Stators einschließlich seiner Stableiter 2 für die elektrische Maschine ermöglicht.

Die individuelle rotatorische Ansteuerung (Drehung) der Kopplungskörper beim Biegeprozess kann auch dazu genutzt werden, azimutale Verbindungsweiten zwischen Stableiterenden an unterschiedlichen Lagenpaaren unterschiedlich einzurichten. Beispielsweise kann in einem Lagenpaar eine elektrische Verbindung zwischen azimutal nächsten Nachbarn vorbereitet werden, und in einem anderen Lagenpaar eine elektrische Verbindung zu azimutal übernächsten Nachbarn. Dies ist mit der erfindungsgemäßen Apparatur gut möglich.

Zusammenfassend betrifft die Erfindung eine Apparatur (1) zum Biegen von in ringförmigen Lagen (L1-L4) angeordneten Enden (2a) von in einem Stator-Grundkörper (3a) angeordneten Stableitern (2) für eine elektrische Maschine, umfassend mehrere koaxial angeordnete Kopplungskörper (6) mit Kopplungsausnehmungen (7), mit denen die Enden (2a) der Stableiter (2) lagenweise ergriffen und plastisch verformt werden können. Für jeden Kopplungskörper (6) ist eine Antriebsplattform (10) vorgesehen, die in axialer Richtung (AR) zusammen mit dem Kopplungskörper (6) verfahren werden kann. Der zu einer Antriebsplattform (10) gehörende Kopplungskörper (6) kann auf der Antriebsplattform (10) rotiert werden. Alle Antriebsplattformen (10) verfahren axial auf einem gemeinsamen Klettergestänge (11). Jede Antriebsplattform (10) verfügt über eine eigene erste Antriebseinrichtung (8) zum axialen Verfahren der Antriebsplattform (10) und eine eigene zweite Antriebseinrichtung (9) zum Rotieren des Kopplungskörpers (6) auf der Antriebsplattform (10), wobei die beiden Antriebseinrichtungen (8, 9) zusammen mit der Antriebsplattform (10) axial verfahren werden. Die Apparatur (1) ist einfach aufgebaut und benötigt wenig Bauraum.

Bezugszeichenliste

| | |
|---|---|
| 1 | Apparatur (auch genannt Twistmaschine) |
| 2 | Stableiter |
| 2a | unteres Ende (Stableiter) |
| 2b | oberes Ende (Stableiter) |
| 3 | Stator |
| 3a | Stator-Grundkörper |
| 4 | Halter |
| 5 | Zentralachse |
| 6 | Kopplungskörper |
| 7 | Kopplungsausnehmung |
| 7a | Krone |
| 8 | erste Antriebseinrichtung |
| 9 | zweite Antriebseinrichtung |
| 10 | Antriebsplattform |
| 11 | Klettergestänge |
| 12 | Kletterstange (hier Gewindestange) |
| 12a | Mittelachse (Kletterstange) |
| 13 | Kletterstück (hier: Gewindemutter) |
| 13a | Übertragungsring |
| 13b | Lager |
| 14 | Getriebe |
| 14a | Übertragungs-Zahnrad |
| 15 | äußerer (nicht-innerster) Kopplungskörper |
| 16 | vorderer Teil |
| 18 | hinterer Teil |
| 20 | innerster Kopplungskörper |
| 21 | vorderer Teil (innerster Kopplungskörper) |
| 22 | hinterer Teil (innerster Kopplungskörper) |
| 26 | Durchbruch |
| 27 | erster Zwischenring |
| 28 | zweiter Zwischenring |
| 28a | Kopplungsflansch |
| 29 | Endstück |
| 30 | Schienensystem |
| 31 | Schiene |
| 32 | Gegenstück |
| 33 | Zusatzplattform |
| 34 | Zusatzantriebseinrichtung |
| 35 | Zusatzkletterstück |
| 36 | Zusatzgegenstück |
| 37 | Maschinenrahmen |
| 38 | radiale Reihe (Enden von Stableitern) |
| 39 | Unterseite |
| 40 | Oberseite |
| 41 | Zwischenflansch |
| 42 | Schenkel |
| 43 | Bügel |
| 44 | gleiche Höhe (obere Enden) |
| 45 | gleiche Höhe (untere Enden) |
| AR | axiale Richtung (auch genannt Achsrichtung) |
| BDW | (gewünschtes) Basis-Drehwinkelintervall |
| DWI | (tatsächlich angesteuertes) Drehwinkelintervall |
| ED | erster Durchmesser (oberer Teil/äußere Kopplungskörper) |
| EDI | erster Durchmesser (oberer Teil/innerster Kopplungskörper) |
| RR | radiale Richtung |
| UR | Umfangsrichtung |
| Ü1-Ü4 | Überbiegungs-Drehwinkelintervall |
| ZD | zweiter Durchmesser (hinterer Teil/äußere Kopplungskörper) |
| ZDI | zweiter Durchmesser (hinterer Teil/innerster Kopplungskörper) |

**Patentansprüche**

1.  Apparatur (1) zum Biegen von in wenigstens vier ringförmigen Lagen (L1-L4) angeordneten Enden (2a) von geraden oder gebogenen Stableitern (2) eines Stators (3) einer elektrischen Maschine, insbesondere eines Elektromotors oder Generators,

    wobei die Apparatur (1) einen Halter (4), insbesondere Klemmhalter, für den Stator (2) umfasst,
    wobei die Apparatur (1) wenigstens vier bezüglich einer Zentralachse (5) konzentrisch angeordnete Kopplungskörper (6) umfasst, die jeweils an einem vorderen Ende eine Vielzahl von ringförmig angeordneten Kopplungsausnehmungen (7) zum Ergreifen der Enden (2a) der Stableiter (2) je einer der ringförmigen Lagen (L1-L4) aufweist,
    und wobei die Apparatur (1) für jeden Kopplungskörper (6) jeweils eine erste Antriebseinrichtung (8) zum Verfahren des Kopplungskörpers (6) in Achsrichtung (AR) der Zentralachse (5) und eine zweite Antriebseinrichtung (9) zum Rotieren des Kopplungskörpers (6) um die Zentralachse (5) aufweist, so dass alle Kopplungskörper (6) unabhängig voneinander axial verfahren und rotiert werden können,
    **dadurch gekennzeichnet,**
    **dass** für jeden Kopplungskörper (6) eine eigene Antriebsplattform (10) vorhanden ist, wobei der Kopplungskörper (6) an der jeweiligen Antriebsplattform (10) um die Zentralachse (5) drehbar, aber axial fest gelagert ist,
    **dass** die Antriebsplattformen (10) an einem gemeinsamen ortsfesten Klettergestänge (11) entlang der Zentralachse (5) einzeln verfahrbar angeordnet sind, wobei das Klettergestänge (11) wenigstens zwei parallel zur Zentralachse (5) angeordnete Kletterstangen (12) umfasst,
    und **dass** eine jeweilige Antriebsplattform (10) aufweist

- die erste Antriebseinrichtung (8) und die zweite Antriebseinrichtung (9) des zur Antriebsplattform (10) gehörenden Kopplungskörpers (6);
- wenigstens zwei Kletterstücke (13) zum axialen Verfahren der Antriebsplattform (10), wobei die Kletterstücke (13) axial an der Antriebsplattform (10) festgelegt sind und jeweils an eine der Kletterstangen (12) gekoppelt sind, und wobei die Kletterstücke (13) von der ersten Antriebseinrichtung (8) angetrieben sind, und
- ein Getriebe (14) zum Rotieren des Kopplungskörpers (6) gegenüber der Antriebsplattform (10), wobei das Getriebe (14) an den Kopplungskörper (6) gekoppelt ist und von der zweiten Antriebseinrichtung (9) angetrieben ist.

2. Apparatur (1) nach Anspruch 1, **dadurch gekennzeichnet,**

   **dass** zumindest die äußeren Kopplungskörper (6, 15) jeweils einen im Wesentlichen zylindermantelförmigen vorderen Teil (16) mit einem ersten Durchmesser ED entsprechend einem Durchmesser der ringförmigen Anordnung der Kopplungsausnehmungen (7) und einen ebenfalls im Wesentlichen zylindermantelförmigen hinteren Teil (18) mit einem zweiten Durchmesser ZD aufweisen, mit ZD>ED,
   **dass** der innerste Kopplungskörper (6, 20) ebenfalls einen vorderen Teil (21) und einen hinteren Teil (22) aufweist, insbesondere wobei dieser vordere Teil (21) ebenfalls im Wesentlichen zylindermantelförmig mit einem ersten Durchmesser EDI entsprechend einem Durchmesser der ringförmigen Anordnung der Kopplungsausnehmungen (7) des innersten Kopplungskörpers (6, 20) und dieser hintere Teil (22) ebenfalls im Wesentlichen zylindermantelförmig mit einem zweiten Durchmesser ZDI ausgebildet sind, bevorzugt mit ZDI>EDI,
   **dass** die vorderen Teile (16, 21) und die hinteren Teile (18, 22) der Kopplungskörper (6, 15, 20) jeweils ineinander gesteckt angeordnet sind, und dass das jeweilige Getriebe (14) zu einem Kopplungskörper (6, 15, 20) jeweils am hinteren Teil (18, 22) des Kopplungskörpers (6, 15, 20) ankoppelt.

3. Apparatur (1) nach Anspruch 1 oder 2, **dadurch gekennzeichnet, dass** zumindest die Antriebsplattformen (10) der äußeren Kopplungskörper (6, 15) jeweils einen Durchbruch (26) zur Durchführung von einem oder mehreren weiter innen gelegenen Kopplungskörpern (6, 20) aufweisen.

4. Apparatur (1) nach einem der Ansprüche 1 bis 3, **dadurch gekennzeichnet, dass** die Kletterstangen (12) als Gewindestangen ausgebildet sind, und die Kletterstücke (13) als Gewindemuttern.

5. Apparatur (1) nach einem der Ansprüche 1 bis 3, **dadurch gekennzeichnet, dass** die Kletterstangen (12) als Zahnstangen ausgebildet sind, und die Kletterstücke (13) als Zahnräder oder Schneckenräder.

6. Apparatur (1) nach einem der vorhergehenden Ansprüche, **dadurch gekennzeichnet, dass** die Kletterstangen (12) symmetrisch um die Zentralachse (5) angeordnet sind,
   insbesondere wobei genau zwei einander gegenüber liegende Kletterstangen (12) vorhanden sind.

7. Apparatur (1) nach einem der vorhergehenden Ansprüche, **dadurch gekennzeichnet, dass** auf einer jeweiligen Antriebsplattform (10) ein erster Zwischenring (27) drehbar um die Zentralachse (5) gelagert ist, wobei der erste Zwischenring (27) von der ersten Antriebseinrichtung (8) angetrieben ist, und wobei die Kletterstücke (13) jeweils an unterschiedlichen Stellen an den ersten Zwischenring (27) gekoppelt sind,
   insbesondere wobei die Kletterstücke (13) symmetrisch zur Zentralachse (5) am ersten Zwischenring (27) angeordnet sind.

8. Apparatur (1) nach einem der vorhergehenden Ansprüche, **dadurch gekennzeichnet, dass** das jeweilige von der zweiten Antriebseinrichtung (9) angetriebene Getriebe (14) ein Zahnrad (14a) oder eine Zahnstange umfasst und in eine Verzahnung am Kopplungskörper (6) oder an einem mit dem Kopplungskörper (6) starr verbundenen zweiten Zwischenring (28) eingreift.

9. Apparatur (1) nach einem der vorhergehenden Ansprüche, **dadurch gekennzeichnet, dass** die Kopplungsausnehmungen (7) eines jeweiligen Kopplungskörpers (6) an einem Endstück (29) ausgebildet sind, das auswechselbar am übrigen Kopplungskörper (6) befestigt ist.

10. Apparatur (1) nach einem der vorhergehenden Ansprüche, **dadurch gekennzeichnet, dass** die Kopplungsausnehmungen (7) am vorderen Ende eines jeweiligen Kopplungskörpers (6) kronenartig ausgebildet sind.

11. Apparatur (1) nach einem der vorhergehenden Ansprüche, **dadurch gekennzeichnet, dass** die Apparatur (1) weiterhin ein Schienensystem (30) mit wenigstens zwei ortsfesten, parallel zur Zentralachse (5) verlaufenden Schienen (31) umfasst, und weiterhin an jeder Antriebsplattform (10) wenigstens zwei Gegenstücke (32) befestigt oder ausgebildet sind, die jeweils an einer der Schienen (31) axial verfahrbar angeordnet sind.

12. Apparatur (1) nach einem der vorhergehenden Ansprüche, **dadurch gekennzeichnet, dass** der Halter (4) für den Stator (2) an einer Zusatzplattform (33) angeordnet ist, wobei die Zusatzplattform (33) ebenfalls am Klettergestänge (11) in Achsrichtung (AR) der Zentralachse (5) verfahrbar angeordnet ist, und dass die Zusatzplattform (33) eine Zusatzantriebseinrichtung (34) und wenigstens zwei Zusatzkletterstücke (35) zum axialen Verfahren der Zusatzplattform (33) aufweist, wobei die Zusatzkletterstücke (35) axial an der Zusatzplattform (33) festgelegt sind und jeweils an eine der Kletterstangen (12) gekoppelt sind, und wobei die Zusatzkletterstücke (35) von der Zusatzantriebseinrichtung (34) angetrieben sind.

13. Apparatur (1) nach Anspruch 11 und 12, **dadurch gekennzeichnet, dass** an der Zusatzplattform (33) weiterhin wenigstens zwei Zusatzgegenstücke (36) befestigt oder ausgebildet sind, die jeweils an einer der Schienen (31) axial verfahrbar angeordnet sind.

14. Verwendung einer Apparatur (1) nach einem der vorhergehenden Ansprüche zum Biegen von in wenigstens vier ringförmigen Lagen (L1-L4) angeordnete Enden (2a) von geraden oder gebogenen Stableitern (2) eines Stators (3) einer elektrischen Maschine, insbesondere eines Elektromotors oder Generators,

   wobei der Stator (3) im Halter (4) angeordnet ist, wobei die Enden (2a) der im Stator (3) angeordneten Stableiter (2) einer jeweiligen ringförmigen Lage (L1-L4) von den Kopplungsausnehmungen (7) jeweils eines Kopplungskörpers (6) übergriffen werden, und wobei die Axialbewegungen und die Rotationsbewegungen der Kopplungskörper (6) unabhängig voneinander angesteuert werden, insbesondere wobei die Drehrichtungen der radial aufeinander folgenden Kopplungskörper (6) alternieren.

15. Verwendung nach Anspruch 14, **dadurch gekennzeichnet, dass** beim Biegen der Enden (2a) der Stableiter (2) des Stators (3) die Hübe (H1-H4) der Axialbewegungen der Kopplungskörper (6) von innen nach außen hin zunehmen, insbesondere wobei die Drehwinkelintervalle (DWI) der Rotationsbewegungen der Kopplungskörper (6) von innen nach außen hin zunehmen.

**Claims**

1. An apparatus (1) for bending ends (2a), arranged in at least four annular layers (L1-L4), of straight or bent bar conductors (2) of a stator (3) of an electrical machine, in particular of an electric motor or generator,

   wherein the apparatus (1) comprises a holder (4), in particular a clamping holder, for the stator (2),
   wherein the apparatus (1) comprises at least four coupling members (6) which are arranged concentrically with respect to a center axis (5) and which each have at a front end a plurality of annularly arranged coupling recesses (7) for gripping the ends (2a) of the bar conductors (2) of one of the annular layers (L1-L4), respectively,
   and wherein the apparatus (1) has for each coupling member (6) a respective first drive device (8) for displacing the coupling member (6) in an axial direction (AR) of the center axis (5) and a second drive device (9) for rotating the coupling member (6) about the center axis (5) so that all the coupling members (6) can be axially displaced and rotated independently of each other, **characterized in that**
   for each coupling member (6) an individual drive platform (10) is provided, wherein the coupling member (6) is supported on the respective drive platform (10) such that it can be rotated about the center axis (5), but is axially fixed on the drive platform (10),
   **in that** the drive platforms (10) are individually displaceably arranged on a common fixed jacking rod assembly (11) along the center axis (5), wherein the jacking rod assembly (11) comprises at least two jacking rods (12) which are arranged parallel with the center axis (5),
   and **in that** a respective drive platform (10) comprises

      - the first drive device (8) and the second drive device (9) of the coupling member (6) which belongs to the drive platform (10);
      - at least two jacking pieces (13) for axially displacing the drive platform (10), wherein the jacking pieces (13) are axially secured to the drive platform (10) and are each coupled to one of the jacking rods (12), and

   wherein the jacking pieces (13) are driven by the first drive device (8), and - a gear mechanism (14) for rotating the coupling member (6) relative to the drive platform (10), wherein the gear mechanism (14) is coupled to the coupling member (6) and is driven by the second drive device (9).

**2.** The apparatus (1) as claimed in claim 1, **characterized in that** at least the outer coupling members (6, 15) each have a substantially cylinder-mantle-like front portion (16) with a first diameter ED corresponding to a diameter of the annular arrangement of the coupling recesses (7) and a similarly substantially cylinder-mantle-like rear portion (18) with a second diameter ZD, with ZD>ED,

in that the innermost coupling member (6, 20) also has a front portion (21) and a rear portion (22), particularly wherein this front portion (21) is also constructed in a substantially cylinder-mantle-like manner with a first diameter EDI corresponding to a diameter of the annular arrangement of the coupling recesses (7) of the innermost coupling member (6, 20) and this rear portion (22) is also constructed in a substantially cylinder-mantle-like manner with a second diameter ZDI, preferably with ZDI>EDI, **in that** the front portions (16, 21) and the rear portions (18, 22) of the coupling members (6, 15, 20) are each arranged in a state inserted one in the other, and **in that** the respective gear mechanism (14) is coupled to a coupling member (6, 15, 20) at the rear portion (18, 22) of the respective coupling member (6, 15, 20).

**3.** The apparatus (1) as claimed in claim 1 or 2, **characterized in that** at least the drive platforms (10) of the outer coupling members (6, 15) each have an opening (26) for introducing one or more coupling members (6, 20) which are located further inward.

**4.** The apparatus (1) as claimed in one of claims 1 to 3, **characterized in that** the jacking rods (12) are constructed as threaded rods and the jacking pieces (13) are constructed as threaded nuts.

**5.** The apparatus (1) as claimed in one of claims 1 to 3, **characterized in that** the jacking rods (12) are constructed as toothed racks and the jacking pieces (13) are constructed as toothed wheels or worm gears.

**6.** The apparatus (1) as claimed in one of the preceding claims, **characterized in that** the jacking rods (12) are arranged symmetrically about the center axis (5), particularly wherein precisely two mutually opposite jacking rods (12) are provided.

**7.** The apparatus (1) as claimed in one of the preceding claims, **characterized in that**

a first intermediate ring (27) is rotatably supported about the center axis (5) on a respective drive platform (10), wherein the first intermediate ring (27) is driven by the first drive device (8) and wherein the jacking pieces (13) are each coupled at different locations to the first intermediate ring (27), particularly wherein the jacking pieces (13) are arranged symmetrically relative to the center axis (5) on the first intermediate ring (27).

**8.** The apparatus (1) as claimed in one of the preceding claims, **characterized in that** the respective gear mechanism (14) which is driven by the second drive device (9) comprises a toothed wheel (14a) or a toothed rack and engages in a tooth arrangement on the coupling member (6) or on a second intermediate ring (28) which is rigidly connected to the coupling member (6).

**9.** The apparatus (1) as claimed in one of the preceding claims, **characterized in that** the coupling recesses (7) of a respective coupling member (6) are constructed on an end piece (29) which is secured to the remaining coupling member (6) in a replaceable manner.

**10.** The apparatus (1) as claimed in one of the preceding claims, **characterized in that** the coupling recesses (7) at the front end of a respective coupling member (6) are constructed in a crown-like manner.

**11.** The apparatus (1) as claimed in one of the preceding claims, **characterized in that** the apparatus (1) further comprises a rail system (30) having at least two fixed rails (31) which extend parallel with the center axis (5), and at least two counter-pieces (32) which are each arranged in an axially displaceable manner on one of the rails (31) are further fixed or constructed on each drive platform (10).

**12.** The apparatus (1) as claimed in one of the preceding claims, **characterized in that** the holder (4) for the stator (2) is arranged on an additional platform (33), wherein the additional platform (33) is also displaceably arranged on the jacking rod assembly (11) in an axial direction (AR) of the center axis (5), and **in that** the additional platform (33) has an additional drive device (34) and at least two additional jacking pieces (35) for axially displacing the additional platform (33), wherein the additional jacking pieces (35) are axially secured to the additional platform (33) and are each coupled to one of the jacking rods (12), and wherein the additional jacking pieces (35) are driven by the additional drive device (34).

**13.** The apparatus (1) as claimed in claim 11 and 12, **characterized in that** at least two additional counter-pieces (36) which are each arranged on one of the rails (31) in an axially displaceable manner are further fixed or constructed on the additional platform (33).

14. Use of an apparatus (1) as claimed in one of the preceding claims for bending ends (2a), which are arranged in at least four annular layers (L1-L4), of straight or bent bar conductors (2) of a stator (3) of an electrical machine, in particular of an electric motor or generator,

> wherein the stator (3) is arranged in the holder (4),
> wherein the ends (2a) of the bar conductors (2), which are arranged in the stator (3), of a respective annular layer (L1-L4) are engaged over by the coupling recesses (7) of a coupling member (6), respectively,
> and wherein the axial movements and the rotational movements of the coupling members (6) are controlled independently of each other, particularly wherein the directions of rotation alternate between the coupling members (6) which follow each other radially.

15. Use as claimed in claim 14, **characterized in that**

> the strokes (H1-H4) of the axial movements of the coupling members (6) increase in an outward direction when the ends (2a) of the bar conductors (2) of the stator (3) are bent,
> particularly wherein the rotation angle ranges (DW1) of the rotational movements of the coupling members (6) increase in an outward direction.

**Revendications**

1. Appareil (1) pour plier des extrémités (2a) agencées en au moins quatre couches annulaires (L1-L4) de conducteurs en forme de barre (2) droits ou pliés, d'un stator (3) pour une machine électrique, en particulier d'un moteur électrique ou d'un générateur, l'appareil (1) comprenant un support (4), en particulier un support de serrage, pour le stator (2),

> l'appareil (1) comprenant au moins quatre corps de couplage (6) agencés de manière concentrique par rapport à un axe central (5), qui présentent chacun à une extrémité avant une pluralité de logements de couplage (7) agencés de manière annulaire pour venir en prise avec les extrémités (2a) des conducteurs en forme de barre (2) respectivement de 'une des couches annulaires (L1-L4), et l'appareil (1) présentant pour chaque corps de couplage (6) respectivement un premier dispositif d'entraînement (8) pour déplacer le corps de couplage (6) dans la direction axiale (AR) de l'axe central (5) et un second dispositif d'entraînement (9) pour faire tourner le corps de couplage (6) autour de l'axe central (5), de sorte que tous les corps de couplage (6) peuvent être déplacés et tournés axialement indépendamment les uns des autres, **caractérisé en ce que**

une plate-forme d'entraînement propre (10) existe pour chaque corps de couplage(6), le corps de couplage (6) étant monté sur la plate-forme d'entraînement respective (10) de manière à pouvoir tourner autour de l'axe central (5), mais étant fixe axialement, les plates-formes d'entraînement (10) sont agencées sur une tringlerie relevable (11) fixe commune, le long de l'axe central (5) pouvant être déplacées individuellement, la tringlerie relevable (11) comprenant au moins deux tringles relevables (12) agencées parallèlement par rapport à l'axe central (5),
et **en ce qu'**une plate-forme d'entraînement respective (10) présente

> - le premier dispositif d'entraînement (8) et le second dispositif d'entraînement (9) de la plate-forme d'entraînement (10) appartenant au corps de couplage (6) ;
> - au moins deux pièces relevables (13) pour un déplacement axial de la plate-forme d'entraînement (10), les pièces relevables (13) étant fixées axialement sur la plate-forme d'entraînement (10) et étant chacune couplées à l'une des tringles relevables (12), et les pièces relevables (13) étant entraînées par le premier dispositif d'entraînement (8), et
> - une transmission (14) pour faire tourner le corps de couplage (6) par rapport à la plate-forme d'entraînement (10), la transmission (14) étant couplée au corps de couplage (6) et étant entraînée par le second dispositif d'entraînement (9).

2. Appareil (1) selon la revendication 1, **caractérisé en ce qu'**au moins les corps de couplage extérieurs (6, 15) présentent chacun une partie avant (16) qui se présente essentiellement sous la forme d'une enveloppe cylindrique avec un premier diamètre ED correspondant à un diamètre de l'agencement annulaire des évidements de couplage (7) et présentent également une partie arrière (18) qui se présente essentiellement sous la forme d'une enveloppe cylindrique avec un second diamètre ZD, avec ZD>ED,

> **en ce que** le corps de couplage le plus à l'intérieur (6, 20) présente également une partie avant (21) et une partie arrière (22), en particulier cette partie avant (21) présentant également essentiellement la forme d'une enveloppe cylindrique avec un premier diamètre EDI correspondant à un diamètre de l'agencement annulaire des évidements de couplage (7) du corps de couplage le plus intérieur (6, 20) et cette partie arrière (22) étant également conçue essentiellement sous la forme d'une enveloppe cylindrique avec un second diamètre ZDI, de préférence avec ZDI>EDI,

**en ce que** les parties avant (16, 21) et les parties arrière (18, 22) des corps de couplage (6, 15, 20) sont chacune agencées enfichées mutuellement, et **en ce que** la transmission respective (14) se couple à un corps de couplage (6, 15, 20) respectif au niveau de la partie arrière (18, 22) du corps de couplage (6, 15, 20).

3. Appareil (1) selon la revendication 1 ou 2, **caractérisé en ce qu'**au moins les plates-formes d'entraînement (10) des corps de couplage extérieurs (6, 15) présentent chacune une ouverture (26) pour le passage d'un ou plusieurs corps de couplage (6, 20) situés plus à l'intérieur.

4. Appareil (1) selon l'une quelconque des revendications 1 à 3, **caractérisé en ce que** les tringles relevables (12) sont réalisées sous la forme de barres filetées et les pièces relevables (13) sous la forme d'écrous filetés.

5. Appareil (1) selon l'une quelconque des revendications 1 à 3, **caractérisé en ce que** les tringles relevables (12) sont réalisées sous la forme de crémaillères et les pièces relevables (13) sous la forme de roues dentées ou de roues hélicoïdales.

6. Appareil (1) selon l'une quelconque des revendications précédentes, **caractérisé en ce que** les tringles relevables (12) sont agencées symétriquement autour de l'axe central (5),
en particulier exactement deux tringles relevables (12) mutuellement opposées étant présentes.

7. Appareil (1) selon l'une quelconque des revendications précédentes, **caractérisé en ce qu'**une première bague intermédiaire (27) est montée rotative autour de l'axe central (5) sur une plate-forme d'entraînement respective (10), la première bague intermédiaire (27) étant entraînée par le premier dispositif d'entraînement (8), et les pièces relevables (13) étant respectivement couplées à la première bague intermédiaire (27) à différents endroits,
les pièces relevables (13) étant en particulier agencées symétriquement par rapport à l'axe central (5) au niveau de la première bague intermédiaire (27).

8. Appareil (1) selon l'une quelconque des revendications précédentes, **caractérisé en ce que** la transmission respective (14) entraînée par le second dispositif d'entraînement (9) comprend une roue dentée (14a) ou une crémaillère et vient en prise dans une denture sur le corps de couplage (6) ou au niveau d'une seconde bague intermédiaire (28) reliée de manière rigide au corps de couplage (6).

9. Appareil (1) selon l'une quelconque des revendications précédentes, **caractérisé en ce que** les évidements de couplage (7) d'un corps de couplage (6) respectif sont réalisés sur une pièce d'extrémité (29) qui est fixée de manière interchangeable au reste du corps de couplage (6).

10. Appareil (1) selon l'une quelconque des revendications précédentes, **caractérisé en ce que** les évidements de couplage (7) sont réalisés en forme de couronne à l'extrémité avant d'un corps de couplage respectif (6).

11. Appareil (1) selon l'une quelconque des revendications précédentes, **caractérisé en ce que** l'appareil (1) comprend en outre un système de rails (30) avec au moins deux rails fixes (31) s'étendant parallèlement à l'axe central (5), et en outre au moins deux homologues (32) sont fixés ou formés sur chaque plate-forme d'entraînement (10), chacun étant disposé de manière mobile axialement sur l'un des rails (31).

12. Appareil (1) selon l'une quelconque des revendications précédentes, **caractérisé en ce que** :
le support (4) pour le stator (2) est agencé sur une plate-forme supplémentaire (33), la plate-forme supplémentaire (33) étant également agencée sur la tringlerie relevable (11) de manière mobile dans la direction axiale (AR) de l'axe central (5), et la plate-forme supplémentaire (33) présentant un dispositif d'entraînement supplémentaire (34) et au moins deux pièces relevables supplémentaires (35) pour un déplacement axial de la plate-forme supplémentaire (33), les pièces relevables supplémentaires (35) étant fixées axialement sur la plate-forme supplémentaire (33) et étant couplées respectivement à l'une des tringle relevables(12), et les pièces relevables supplémentaires (35) étant entraînées par le dispositif d'entraînement supplémentaire (34).

13. Appareil (1) selon les revendications 11 et 12, **caractérisé en ce que** sur la plate-forme supplémentaire (33) sont fixés ou formés en outre au moins deux homologues supplémentaires (36) qui sont agencés de manière à pouvoir être déplacés axialement respectivement sur l'un des rails (31).

14. Utilisation d'un appareil (1) selon l'une quelconque des revendications précédentes pour plier des extrémités (2a) agencées en au moins quatre couches annulaires (L1-L4), de conducteurs en forme de barre (2) droits ou pliés, d'un stator (3) d'une machine électrique, en particulier d'un moteur électrique ou d'un générateur,

le stator (3) étant agencé dans le support (4), les extrémités (2a) des barres conductrices (2) d'une couche annulaire respective (L1-L4) agencées dans le stator (3) étant recouvertes par les évidements de couplage (7) d'un corps de couplage respectif (6), et les déplacements axiaux et les déplacements de rotation des corps de couplage (6) étant commandés indépendamment les uns des autres, en particulier avec une alternance des directions de rotation des corps de couplage (6) successifs radialement.

15. Utilisation selon la revendication 14, **caractérisée en ce que** lors du pliage des extrémités (2a) des barres conductrices (2) du stator (3), les courses (H1-H4) des déplacements axiaux des corps de couplage (6) augmentent de l'intérieur vers l'extérieur, en particulier, les intervalles d'angle de rotation (DWI) des déplacements de rotation des corps de couplage (6) augmentent de l'intérieur vers l'extérieur.

FIG. 1

FIG. 2A

FIG. 2C

FIG. 2B

FIG. 3A

FIG. 3B

FIG. 4

FIG. 5A

FIG. 5B

22

FIG. 6A

FIG. 6B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8327677 B2
- US 2018375409 A1

- EP 1117172 A2